# EUROPÄISCHE PATENTSCHRIFT

(11) **EP 3 259 501 B1**
(45) Veröffentlichungstag und Bekanntmachung des Hinweises auf die Patenterteilung: **09.01.2019**
(21) Anmeldenummer: 16701255.8
(22) Anmeldetag: 21.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/000103
(87) Internationale Veröffentlichungsnummer: WO 2016/131522

(56) Entgegenhaltungen:
- WO-A1-2016/023792
- DE-A1-102011 089 167
- DE-A1-102012 013 248
- DE-A1-102012 217 008
- DE-A1-102012 219 437

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe werden häufig in Kraftfahrzeugen verwendet. Neben einem guten Wirkungsgrad haben diese Getriebe unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Aus der DE 10 2012 219 437 A1 ist ein Doppelkupplungsgetriebe bekannt, welches unter den Wortlaut des Oberbegriffes des Anspruches 1 fällt. Das Doppelkupplungsgetriebe weist eine erste Eingangswelle und eine zweite Eingangswelle auf. Aus der DE 10 2012 013 248 A1 ist eine Antriebsvorrichtung für Kraftfahrzeuge bekannt. Aus der DE 10 2012 217 008 A1 ist ein Getriebe mit zwei Eingangswellen bekannt. Aus der DE 10 2011 089 167 A1 ist ein Doppelkupplungsgetriebe in Vorgelegebauweise bekannt. Aus der WO 2016/023792 A1 ist ein Geschwindigkeits-Wechselgetriebe für ein Kraftfahrzeug bekannt.

Die Aufgabe der Erfindung besteht darin, ein Doppelkupplungsgetriebe bereitzustellen, das bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruchs 1 gelöst. Besonders vorteilhafte Weiterbildungen und Ausgestaltungen der Erfindung sind Gegenstand der abhängigen Ansprüche.

Erfindungsgemäß wird vorgeschlagen, dass der Zahnradsatz der fünften Radebene auf beide Teilgetriebe schaltbar ist. Grundgedanke der Erfindung ist es, bei geringem getriebetechnischen Mehraufwand und ohne Verzicht auf den Vorteil der Zugkraft unterbrechungsfreien Beschleunigung des Kraftfahrzeugs zumindest einen Vorwärtsgang zu überspringen, also beispielsweise von einem ungeraden Vorwärtsgang verzögerungsfrei in den nächsten ungeraden Vorwärtsgang schalten zu können. Insbesondere bei starken Motorisierungen des Kraftfahrzeugs und bei definierten Fahrbedingungen kann dies eine verbesserte, ohne Schaltverzögerungen ablaufende Beschleunigung und gegebenenfalls einen verbesserten Wirkungsgrad im Fahrbetrieb ermöglichen.

Besonders bevorzugt kann der Zahnradsatz der fünften Radebene zumindest den 3. Vorwärtsgang des zweiten Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der besagte Zahnradsatz der fünften Radebene auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.
Erfindungsgemäß ist das abtriebsseitige Zahnrad des auf beide Teilgetriebe schaltbaren Zahnradsatzes der fünften Radebene auf der gemeinsamen Abtriebswelle des Doppelkupplungsgetriebes angeordnet, während das korrespondierende, schaltbare antriebsseitige Zahnrad steuerungstechnisch einfach mit einem Getriebeelement des Teilgetriebes A oder des Teilgetriebes B kuppelbar ist. Die Schaltkupplung bzw. das Schaltelement kann dabei eine Doppelkupplung sein, mittels der ein Zahnradsatz des einen Teilgetriebes oder der Zahnradsatz des anderen Teilgetriebes schaltbar ist.

Erfindungsgemäß werden bei dem 12-Gang Getriebe durch Mehrfachnutzung der Zahnradsätze nur acht Gangebenen verwendet, wobei der gemeinsam genutzte Zahnradsatz der fünften Radebene des zweiten Teilgetriebes dem ersten Teilgetriebe unmittelbar benachbart angeordnet ist. Das Doppelkupplungsgetriebe kann somit baulich relativ kurz und mit geringst möglichen Schaltelementen und Gangstellern ausgeführt sein.
Des Weiteren können dazu Festzahnräder der ersten, zweiten, siebten und achten Radebenen beider Teilgetriebe auf jeweils gemeinsamen, abtriebsseitigen Hohlwellen befestigt und diese auf der gemeinsamen Abtriebswelle drehbar gelagert sowie über Schaltkupplungen mit der Abtriebswelle koppelbar sein.
Ferner können weitere antriebsseitige Zahnräder der zweiten und dritten Radebenen auf einer antriebsseitigen Hohlwelle angeordnet sein, die auf der Eingangswelle des ersten Teilgetriebes gelagert ist und die mittels einer Schaltkupplung mit dem Zahnradsatz der fünften Radebene kuppelbar ist.

Schließlich können bei möglichst geringem, getriebetechnischen Aufwand die zwölf Vorwärtsgänge mittels fünf beidseitig schaltbarer Schaltelemente und einem einseitig schaltbaren Schaltelement schaltbar sein, wobei vier beidseitig schaltbare Schaltelemente auf den koaxial angeordneten beiden Eingangswellen der Teilgetriebe und ein beidseitig schaltbares Schaltelement sowie ein einseitig schaltbares Schaltelement auf der gemeinsamen Abtriebswelle positioniert sind.

Besonders bevorzugt können die Eingangswellen komplett frei von darauf angeordneten drehfesten Zahnrädern der Radebenen (RE-1 bis RE-8) sein. In diesem Fall weist jede der Eingangswellen genau ein in Axialrichtung beidseitig schaltbares erstes Schaltelement auf. Mittels des ersten Schaltelements ist die erste Eingangswelle mit sämtlichen Radebenen (RE-1 bis RE-4) des ersten Teilgetriebes (A) kuppelbar oder davon abkuppelbar. Mittels des zweiten Schaltelements ist die zweite Eingangswelle mit sämtlichen Radebenen (RE-5 bis RE-8) des zweiten Teilgetriebes (B) kuppelbar oder davon abkuppelbar.

Erfindungsgemäß tragen daher die beiden koaxialen Eingangswellen nicht mehr Festzahnräder, sondern lediglich die beiden ersten und zweiten Schaltelemente. Dadurch können die Eingangswellen im Vergleich zum obigen Stand der Technik wesentlich materialreduzierter ausgelegt werden. Zudem können mittels der ersten und zweiten Schaltelemente (SE-C und SE-A) Radebenen im jeweils aktivierten Teilgetriebe zumindest teilweise vom Momentenfluss abgekoppelt werden (das heißt stillgelegt werden), wodurch das Trägheitsmoment des aktivierten Teilgetriebes reduzierbar ist. Dies führt bei einem Schaltvorgang zu einer Verkürzung von Schaltzeiten bzw. zu einer Reduzierung des für den Schaltvorgang erforderlichen Energieaufwandes.

Das im ersten Teilgetriebe angeordnete erste Schaltelement (SE-C) kann in einer technischen Umsetzung in der Axialrichtung beidseitig schaltbar sein. In diesem Fall kann das erste Schaltelement (SE-C) des ersten Teilgetriebes (A) jeweils auf ein, auf der ersten Eingangswelle gelagertes antriebsseitiges Loszahnrad der ersten Radebene (RE-1) oder auf eine, auf der ersten Eingangswelle koaxial gelagerte antriebsseitige Hohlwelle gekuppelt werden. Die auf der ersten Eingangswelle drehgelagerte, antriebsseitige Hohlwelle kann zwei antriebsseitige Festzahnräder tragen, die jeweils der zweiten Radebene (RE-2) und der dritten Radebene (RE-3) zugeordnet sind.

In einer technischen Umsetzung kann auf der antriebsseitigen Hohlwelle des ersten Teilgetriebes (A) zusätzlich ein antriebsseitiges Zahnrad der vierten Radebene (RE-4) lose gelagert sein. Zur trieblichen Verbindung mit der Hohlwelle kann diese ein drittes Schaltelement (SE-D) aufweisen, mit dem das losgelagerte antriebsseitige Zahnrad der vierten Radebene (RE-4) mit der antriebsseitigen Hohlwelle des ersten Teilgetriebes (A) kuppelbar ist.

In einer Weiterbildung der Erfindung ist dem zweiten Teilgetriebe (B) die, an dem ersten Teilgetriebe (A) in der Axialrichtung unmittelbar angrenzende fünfte Radebene (RE-5) zugeordnet. Die fünfte Radebene (RE-5) kann ein antriebsseitiges Zahnrad aufweisen, das auf der zweiten Eingangswelle drehbar gelagert ist und bevorzugt mittels des obigen dritten Schaltelementes (SE-D) an die antriebsseitige Hohlwelle des ersten Teilgetriebes A kuppelbar ist. Auf diese Weise kann die fünfte Radebene (RE-5) auf beide Teilgetriebe (A, B) geschaltet werden.

Das von der zweiten Eingangswelle getragene zweite Schaltelement (SE-A) kann in Axialrichtung beidseitig schaltbar sein (zum Beispiel als Doppelsynchronkupplung). In diesem Fall kann in der Axialrichtung des zweiten Schaltelementes (SE-A) im zweiten Teilgetriebe (B) auf der einen Seite des zweiten Schaltelements (SE-A) ein auf der zweiten Eingangswelle gelagertes antriebsseitiges Loszahnrad der achten Radebene (RE-8) und auf der anderen Seite des zweiten Schaltelements (SE-A) eine auf der zweiten Eingangswelle koaxial gelagerte antriebsseitige Hohlwelle angeordnet sein. Die antriebsseitige Hohlwelle und das obige Loszahnrad der achten Radebene können (über das zweite Schaltelement SE-A) alternierend mit der zweiten Eingangswelle kuppelbar sein. Die antriebsseitige Hohlwelle des zweiten Teilgetriebes (B) kann bevorzugt ein antriebsseitiges Festzahnrad der siebten Radebene (RE-7) tragen sowie ein antriebsseitiges Loszahnrad der sechsten Radebene (RE-6) tragen. Zum Schalten des antriebsseitigen Loszahnrads der sechsten Radebene (RE-6) kann die Hohlwelle ein viertes Schaltelement (SE-B) aufweisen, mit dem im zweiten Teilgetriebe das losgelagerte antriebsseitige Zahnrad der sechsten Radebene mit der abtriebsseitigen Hohlwelle kuppelbar ist. In einer bevorzugten Ausführungsvariante kann mittels des obigen vierten Schaltelementes (SE-B) zusätzlich auch das antriebsseitige, losgelagerte Zahnrad der auf beide Teilgetriebe (A, B) schaltbaren fünften Radebene (RE-5) an die antriebsseitige Hohlwelle des zweiten Teilgetriebes (B) gekuppelt werden.
In einer technischen Umsetzung ist die Abtriebswelle achsparallel zur Eingangswelle angeordnet. Bevorzugt können die abtriebsseitigen Zahnräder der ersten und zweiten Radebene (RE1, RE-2) im ersten Teilgetriebe (A) drehfest auf einer abtriebsseitigen Hohlwelle angeordnet sein, die koaxial auf der Abtriebswelle drehbar gelagert ist. Die Abtriebswelle kann zudem ein fünftes Schaltelement (SE-F) aufweisen, mittels dem im ersten Teilgetriebe alternierend die abtriebsseitige Hohlwelle oder ein abtriebsseitiges Zahnrad der dritten Radebene (RE- 3) mit der Abtriebswelle kuppelbar ist.

In ähnlicher Weise wie im ersten Teilgetriebe können auch im zweiten Teilgetriebe die abtriebsseitigen Zahnräder der siebten und achten Radebene (RE-7, RE-8) drehfest auf einer abtriebsseitigen Hohlwelle angeordnet sein, die koaxial auf der Abtriebswelle drehbar gelagert ist. Die im zweiten Teilgetriebe (B) auf der Abtriebswelle drehgelagerte Hohlwelle kann mit Hilfe eines sechsten, einseitigen Schaltelementes (SE-E) mit der Abtriebswelle gekuppelt werden.

In einer Ausführungsvariante kann das abtriebsseitige Zahnrad der auf beide Teilgetriebe (A, B) schaltbaren fünften Radebene (RE-5) als ein Festzahnrad drehfest auf der Abtriebswelle angeordnet sein. In diesem Fall würde im Fahrbetrieb die fünfte Radebene (RE-5) ständig mitdrehen und gegebenenfalls die Drehlager vorzeitig verschleißen. Vor diesem Hintergrund kann das abtriebsseitige Zahnrad der fünften Radebene (RE-5) auch lose auf der Abtriebswelle gelagert sein und über ein siebtes Schaltelement (SE-G) an die Abtriebswelle kuppelbar sein.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

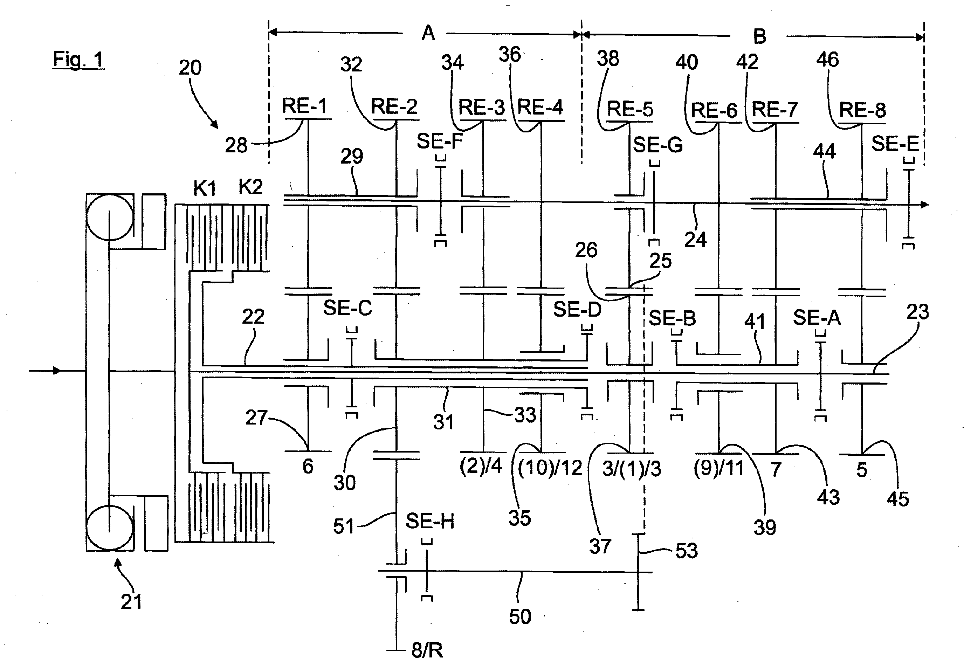

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung li) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

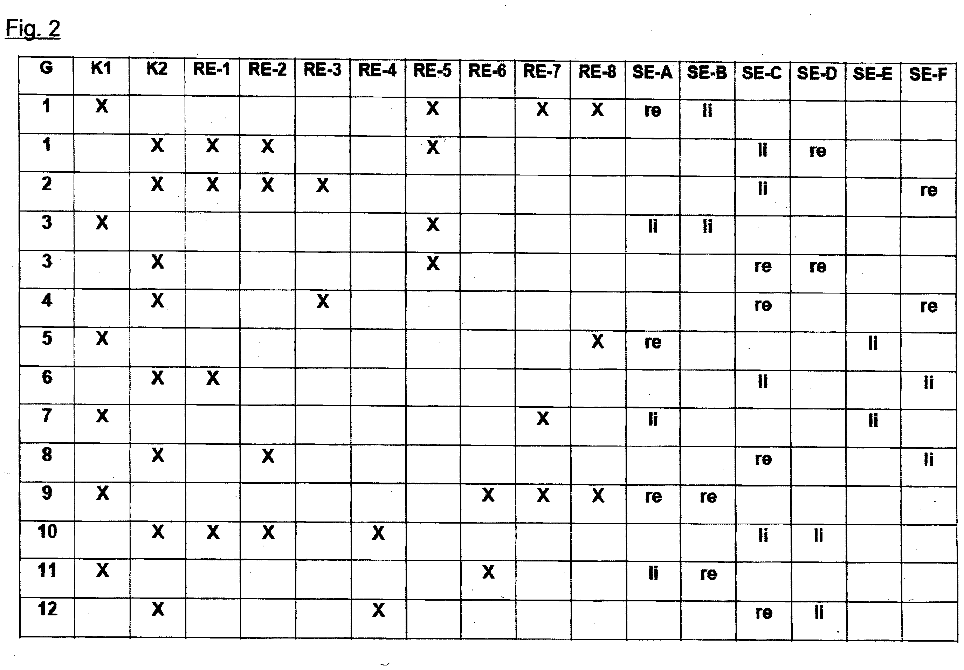

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (li) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet, Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die einem ersten und einem zweiten Teilgetriebe (A, B) zugeordnet sind, wobei das erste Teilgetriebe (A) eine erste Eingangswelle (22) aufweist und das zweite Teilgetriebe (B) eine zweite Eingangswelle (23) aufweist, und die beiden Teilgetriebe (A, B) eine gemeinsame Abtriebswelle (24) aufweisen, wobei die Eingangswellen (22, 23) über je eine lastschaltbare Kupplung (K1, K2) alternierend aktivierbar sind und wobei ferner dem zweiten Teilgetriebe (B) die ungeraden Vorwärtsgänge (1, 3, 5, ff) und dem ersten Teilgetriebe (A) die geraden Vorwärtsgänge (2, 4, 6, ff) zugeordnet sind, die über entsprechende Schaltelemente schaltbar sind, wobei die Zahnradsätze der ersten bis vierten Radebenen (RE-1 bis RE-4) das erste Teilgetriebe (A) bilden und die Zahnradsätze der fünften bis achten Radebenen (RE-5 bis RE-8) das zweite Teilgetriebe (B)bilden, **dadurch gekennzeichnet, dass** das Doppelkupplungsgetriebe ein 12-Gang-Getriebe (20) ist, in dem durch Mehrfachnutzung der Zahnradsätze der Radebenen (RE-1 bis RE-8) nur acht Radebenen verwendet sind, wobei der Zahnradsatz der fünften Radebene (RE-5) des zweiten Teilgetriebes (B) über ein Schaltelement (SE-D) mit dem ersten Teilgetriebe (A) kuppelbar ist, wobei ein abtriebsseitiges Zahnrad (38) des auf beide Teilgetriebe (A, B) schaltbaren Zahnradsatzes der fünften Radebene (RE-5) auf der gemeinsamen Abtriebswelle (24) angeordnet ist und das antriebsseitige Zahnrad (37) des auf beide Teilgetriebe (A, B) schaltbaren Zahnradsatzes (RE-5) über Schaltelemente (SE-D, SE-B) mit dem ersten Teilgetriebe (A) oder mit dem zweiten Teilgetriebe (B) kuppelbar ist, und wobei eines (SE-D) der Schaltelemente (SE-D, SE-B) ein in der Axialrichtung beidseitig schaltbares Schaltelement ist, mittels dem der Zahnradsatz der vierten Radebene (RE-4) des ersten Teilgetriebes (A) oder der auf beide Teilgetriebe (A, B) schaltbare Zahnradsatz der fünften Radebene (RE-5) des zweiten Teilgetriebes (B) schaltbar ist, und wobei der gemeinsam genutzte Zahnradsatz der fünften Radebene (RE-5) des zweiten Teilgetriebes (B) dem ersten Teilgetriebe (A) unmittelbar benachbart angeordnet ist.

2. Doppelkupplungsgetriebe nach Anspruch 1, **dadurch gekennzeichnet, dass** der auf beide Teilgetriebe (A, B) schaltbare Zahnradsatz der fünften Radebene (RE-5) zumindest den dritten Vorwärtsgang des zweiten Teilgetriebes (B) bildet, der mittel- oder unmittelbar wahlweise mit der ersten oder zweiten Eingangswelle (22, 23) des ersten oder des zweiten Teilgetriebes (A, B) trieblich verbindbar ist.

3. Doppelkupplungsgetriebe nach Anspruch 2, **dadurch gekennzeichnet, dass** der auf beide Teilgetriebe (A, B) schaltbare Zahnradsatz der fünften Radebene (RE-5) auch in den Leistungsfluss des ersten Vorwärtsganges eingebunden ist.

4. Doppelkupplungsgetriebe nach Anspruch 1, **dadurch gekennzeichnet, dass** die zwölf Vorwärtsgänge mittels fünf beidseitig schaltbarer Schaltelemente (SE-C, SE-D, SE-B, SE-A, SE-F) und einem einseitig schaltbaren Schaltelement (SE-E) schaltbar sind, wobei vier Schaltelemente auf den koaxial angeordneten, beiden Eingangswellen (22, 23) der Teilgetriebe (A und B) und ein beidseitig schaltbares Schaltelement (SE-F) sowie das einseitig schaltbare Schaltelement (SE-E) auf der gemeinsamen Abtriebswelle (24) positioniert sind.

5. Doppelkupplungsgetriebe nach einem der vorhergehenden Ansprüche, **dadurch gekennzeichnet, dass** die Eingangswellen (22, 23) frei von darauf angeordneten drehfesten Zahnrädern der Radebenen (RE-1 bis RE-8) sind, und dass die erste Eingangswelle (22) genau ein in Axialrichtung beidseitig schaltbares erstes Schaltelement (SE-C) aufweist und die zweite Eingangswelle (23) genau ein in Axialrichtung beidseitig schaltbares zweites Schaltelement (SE-A) aufweist, und dass mittels des ersten Schaltelements (SE-C) die erste Eingangswelle (22) mit sämtlichen Radebenen (RE-1 bis RE-4) des ersten Teilgetriebes (A) kuppelbar oder davon abkuppelbar ist, und dass mittels des zweiten Schaltelements (SE-A) die zweite Eingangswelle (23) mit sämtlichen Radebenen (RE-5 bis RE-8) des zweiten Teilgetriebes (B) kuppelbar oder davon abkuppelbar ist,
wobei in der Axialrichtung beidseitig des ersten Schaltelements (SE-C) jeweils ein auf der ersten Eingangswelle (22) gelagertes, antriebsseitiges Loszahnrad (27) der ersten Radebene (RE-1) und eine auf der ersten Eingangswelle (22) koaxial gelagerte antriebsseitige Hohlwelle (31) des ersten Teilgetriebes (A) angeordnet ist, die über das erste Schaltelement (SE-C) alternierend mit der ersten Eingangswelle (22) kuppelbar sind, und dass die antriebsseitige Hohlwelle (31) des ersten Teilgetriebes (A) zumindest ein Festzahnrad (30) der zweiten Radebene (RE-2) trägt und ein Festzahnrad (33) der dritten Radebene (RE-3) trägt,
wobei auf der antriebsseitigen Hohlwelle (31) des ersten Teilgetriebes (A) ein antriebsseitiges Zahnrad (35) der vierten Radebene (RE-4) lose gelagert ist, und dass die antriebsseitige Hohlwelle (31) des ersten Teilgetriebes (A) ein drittes Schaltelement (SE-D) aufweist, mit dem das losgelagerte antriebsseitige Zahnrad (35) der vierten Radebene (RE-4) mit der antriebsseitigen Hohlwelle (31) des ersten Teilgetriebes (A) kuppelbar ist,
wobei
das zweite Teilgetriebe (B) die, dem ersten Teilgetriebe (A) in Axialrichtung unmittelbar angrenzende fünfte Radebene (RE-5) aufweist, und dass die fünfte Radebene (RE-5) mittels des dritten Schaltelements (SE-D) mit dem ersten Teilgetriebe (A) kuppelbar ist,
wobei die auf beide Teilgetriebe (A, B) schaltbare fünfte Radebene (RE-5) mit ihrem antriebsseitigen Zahnrad (37) auf der zweiten Eingangswelle (23) lose gelagert ist, und dass das antriebsseitige Zahnrad (37) der auf beide Teilgetriebe (A, B) schaltbaren fünften Radebene (RE-5) mittels des dritten Schaltelements (SE-D) an die antriebsseitige Hohlwelle (31) des ersten Teilgetriebes (A) kuppelbar ist,
wobei das abtriebsseitige Zahnrad (38) der fünften Radebene (RE-5) lose auf der Abtriebswelle (24) gelagert ist und über ein siebtes Schaltelement (SE-G) an die Abtriesbwelle (24) kuppelbar ist.

6. Doppelkupplungsgetriebe nach einem der vorhergehenden Ansprüche, **dadurch gekennzeichnet, dass** in der Axialrichtung des zweiten Schaltelements (SE-A) des zweiten Teilgetriebes (B) auf der einen Seite des zweiten Schaltelements (SE-A) ein auf der zweiten Eingangswelle (23) gelagertes, antriebsseitiges Loszahnrad (45) der achten Radebene (RE-8) und auf der anderen Seite des zweiten Schaltelements (SE-A) eine auf der zweiten Eingangswelle (23) koaxial gelagerte antriebsseitige Hohlwelle (41) des zweiten Teilgetriebes (B) angeordnet ist, und dass das antriebsseitige Loszahnrad (45) der achten Radebene (RE-8) und die antriebsseitige Hohlwelle (41) des zweiten Teilgetriebes (B) über das zweite Schaltelement (SE-A) alternierend mit der zweiten Eingangswelle (23) kuppelbar sind, und dass die antriebsseitige Hohlwelle (41) des zweiten Teilgetriebes (B) zumindest ein Festzahnrad (43) einer siebten Radebene (RE-7) trägt.

7. Doppelkupplungsgetriebe nach Anspruch 6, **dadurch gekennzeichnet, dass** auf der antriebsseitigen Hohlwelle (41) des zweiten Teilgetriebes (B) ein antriebsseitiges Zahnrad (39) der sechsten Radebene (RE-6) lose gelagert ist, und dass die antriebsseitige Hohlwelle (41) des zweiten Teilgetriebes (B) ein viertes Schaltelement (SE-B) aufweist, mit dem das losgelagerte antriebsseitige Zahnrad (39) der sechsten Radebene (RE-6) mit der antriebsseitigen Hohlwelle (41) des zweiten Teilgetriebes (B) kuppelbar ist.

8. Doppetkupptungsgetriebe nach Anspruch 7, **dadurch gekennzeichnet, dass** das antriebsseitige Zahnrad (37) der auf beide Teilgetriebe (A, B) schaltbaren fünften Radebene (RE-5) mittels des vierten Schaltelements (SE-B) an die antriebsseitige Hohlwelle (41) des zweiten Teilgetriebes (B) kuppelbar ist.

9. Doppelkupplungsgetriebe nach einem der vorhergehenden Ansprüche, **dadurch gekennzeichnet, dass** die Abtriebswelle (24) achsparallel zur ersten und zweiten Eingangswelle (22, 23) angeordnet ist, und/oder dass die abtriebsseitigen Zahnräder (28, 32) der ersten und zweiten Radebenen (RE-1, RE-2) des ersten Teilgetriebes (A) drehfest auf einer abtriebsseitigen Hohlwelle (29) des ersten Teilgetriebes (A) angeordnet sind, die koaxial auf der Abtriebswelle (24) drehbar gelagert ist.

10. Doppelkupplungsgetriebe nach Anspruch 9, **dadurch gekennzeichnet, dass** die Abtriebswelle (24) ein fünftes Schaltelement (SE-F) aufweist, mittels dem im ersten Teilgetriebe (A) alternierend die abtriebsseitige Hohlwelle (29) des ersten Teilgetriebes (A) oder ein abtriebsseitiges, lose auf der Abtriebswelle (24) gelagertes Zahnrad (34) der dritten Radebene (RE-3) mit der Abtriebswelle (24) kuppelbar ist.

11. Doppelkupplungsgetriebe nach einem der vorhergehenden Ansprüche, **dadurch gekennzeichnet, dass** die abtriebsseitigen Zahnräder (42, 46) der siebten und achten Radebenen (RE-7, RE-8) des zweiten Teilgetriebes (B) drehfest auf einer abtriebsseitigen Hohlwelle (44) des zweiten Teilgetriebes (B) angeordnet sind, die koaxial auf der Abtriebswelle (24) drehbar gelagert ist.

12. Doppelkupplungsgetriebe nach Anspruch 11, **dadurch gekennzeichnet, dass** die Abtriebswelle (24) ein sechstes Schaltelement (SE-E) aufweist, mittels dem die abtriebsseitige Hohlwelle (44) des zweiten Teilgetriebes (B) mit der Abtriebswelle (24) kuppelbar ist.

## Claims

1. Dual clutch transmission for a motor vehicle having switchable gear sets which form precisely eight wheel planes (RE-1 to RE-8) disposed one after the other in axial direction from the input side to the output side of the dual clutch transmission in the sequence first to eighth, which are assigned to a first and a second sub-transmission (A, B), wherein the first sub-transmission (A) has a first input shaft (22) and the second sub-transmission (B) has a second input shaft (23), and the two sub-transmissions (A, B) have a shared output shaft (24), wherein the input shafts (22, 23) can be alternatingly activated via in each case one load-shiftable coupling (K1, K2), and wherein additionally the odd forward gears (1, 3, 5, ff) are assigned to the second sub-transmission (B) and the even forward gears (2, 4, 6, ff) are assigned to the first sub-transmission (A), which are switchable via appropriate switching elements, wherein the gear sets of the first to the fourth wheel planes (RE-1 to RE-4) form the first sub-transmission (A) and the gear sets of the fifth to the eighth wheel planes (RE-5 to RE-8) form the second sub-transmission (B),
**characterised in that** the dual clutch transmission is a 12 gear transmission (20) in which through multiple use of the gear sets of the wheel planes (RE-1 to RE-8) only eight wheel planes are used, wherein the gear set of the fifth wheel plane (RE-5) of the second sub-transmission (B) can be coupled via a switching element (SE-D) with the first sub-transmission (A), wherein an output-side gear (38) of the gear set, switchable onto both sub-transmissions (A, B), of the fifth wheel plane (RE-5) is disposed on the shared output shaft (24) and the drive-side gear (37) of the gear set (RE-5) switchable onto both sub-transmissions (A, B) can be coupled via switching elements (SE-D, SE-B) with the first sub-transmission (A) or with the second sub-transmission (B), and wherein one (SE-D) of the switching elements (SE-D, SE-B) is a switching element switchable on both sides in the axial direction, by means of which the gear set of the fourth wheel plane (RE-4) of the first sub-transmission (A) or the gear set, switchable onto both sub-transmissions (A, B), of the fifth wheel plane (RE-5) of the second sub-transmission (B) is switchable, and wherein the jointly used gear set of the fifth wheel plane (RE-5) of the second sub-transmission (B) is disposed directly adjacent to the first sub-transmission (A).

2. Dual clutch transmission according to claim 1, **characterised in that** the gear set, switchable onto both sub-transmissions (A, B), of the fifth wheel plane (RE-5) forms at least the third forwards gear of the second sub-transmission (B), which indirectly or directly is drivingly connectable optionally with the first or second input shaft (22, 23) of the first or the second sub-transmission (A, B).

3. Dual clutch transmission according to claim 2, **characterised in that** the gear set, switchable onto both sub-transmissions (A, B), of the fifth wheel plane (RE-5) is also incorporated into the power flow of the first forwards gear.

4. Dual clutch transmission according to claim 1, **characterised in that** the twelve forwards gears are switchable by means of five switching elements (SE-C, SE-D, SE-B, SEA, SE-F) switchable on both sides and one switching element (SE-E) switchable on one side, wherein four switching elements are positioned on the two coaxially disposed input shafts (22, 23) of the sub-transmissions (A and B) and one switching element (SE-F) switchable on both sides and the switching element (SE-E) switchable on one side is positioned on the shared output shaft (24).

5. Dual clutch transmission according to any of the preceding claims, **characterised in that** the input shafts (22, 23) are free of non-rotational gears of the wheel planes (RE-1 to RE-8) disposed thereon, and that the first input shaft (22) has exactly one first switching element (SE-C) switchable on both sides in axial direction and the second input shaft (23) has exactly one second switching element (SE-A) switchable on both sides in axial direction, and that by means of the first switching element (SE-C) the first input shaft (22) can be coupled with or decoupled from all wheel planes (RE-1 to RE-4) of the first sub-transmission (A), and that by means of the second switching element (SE-A) the second input shaft (23) can be coupled with or decoupled from all wheel planes (RE-5 to RE-8) of the second sub-transmission (B),
wherein in the axial direction on both sides of the first switching element (SE-C) is disposed respectively one drive-side loose gear (27), supported on the first input shaft (22), of the first wheel plane (RE-1), and one drive-side hollow shaft (31), coaxially supported on the first input shaft (22), of the first sub-transmission (A), which can be coupled via the first switching element (SE-C) alternatingly with the first input shaft (22), and that the drive-side hollow shaft (31) of the first sub-transmission (A) bears at least one fixed gear (30) of the second wheel plane (RE-2) and one fixed gear (33) of the third wheel plane (RE-3),
wherein on the drive-side hollow shaft (31) of the first sub-transmission (A) a drive-side gear (35) of the fourth wheel plane (RE-4) is loosely supported, and that the drive-side hollow shaft (31) of the first sub-transmission (A) has a third switching element (SE-D) with which the loosely supported drive-side gear (35) of the fourth wheel plane (RE-4) can be coupled with the drive-side hollow shaft (31) of the first sub-transmission (A),
wherein the second sub-transmission (B) has the fifth wheel plane (RE-5) directly adjacent to the first sub-transmission (A) in axial direction, and that the fifth wheel plane (RE-5) can be coupled by means of the third switching element (SE-D) with the first sub-transmission (A),
wherein the fifth wheel plane (RE-5) switchable onto both sub-transmissions (A, B) is with its drive-side gear (37) loosely supported on the second input shaft (23), and that the drive-side gear (37) of the fifth wheel plane (RE-5) switchable onto both sub-transmissions (A, B) can be coupled by means of the third switching element (SE-D) to the drive-side hollow shaft (31) of the first sub-transmission (A),
wherein the output-side gear (38) of the fifth wheel plane (RE-5) is loosely supported on the output shaft (24) and can be coupled via a seventh switching element (SE-G) to the output shaft (24).

6. Dual clutch transmission according to any of the preceding claims, **characterised in that** in the axial direction of the second switching element (SE-A) of the second sub-transmission (B) on the one side of the second switching element (SE-A) is disposed a drive-side loose gear (45), supported on the second input shaft (23), of the eighth wheel plane (RE-8) and on the other side of the second switching element (SE-A) is disposed a drive-side hollow shaft (41), coaxially supported on the second input shaft (23), of the second sub-transmission (B), and that the drive-side loose gear (45) of the eighth wheel plane (RE-8) and the drive-side hollow shaft (41) of the second sub-transmission (B) can be coupled via the second switching element (SE-A) alternatingly with the second input shaft (23), and that the drive-side hollow shaft (41) of the second sub-transmission (B) bears at least one fixed gear (43) of a seventh wheel plane (RE-7).

7. Dual clutch transmission according to claim 6, **characterised in that** on the drive-side hollow shaft (41) of the second sub-transmission (B), a drive-side gear (39) of the sixth wheel plane (RE-6) is loosely supported, and that the drive-side hollow shaft (41) of the second sub-transmission (B) has a fourth switching element (SE-B), with which the loosely supported drive-side gear (39) of the sixth wheel plane (RE-6) can be coupled with the drive-side hollow shaft (41) of the second sub-transmission (B).

8. Dual clutch transmission according to claim 7, **characterised in that** the drive-side gear (37) of the fifth wheel plane (RE-5) switchable onto both sub-transmissions (A, B) can be coupled by means of the fourth switching element (SE-B) to the drive-side hollow shaft (41) of the second sub-transmission (B).

9. Dual clutch transmission according to any of the preceding claims, **characterised in that** the output shaft (24) is disposed axially parallel to the first and second input shaft (22, 23), and/or that the output-side gears (28, 32) of the first and second wheel planes (RE-1, RE-2) of the first sub-transmission (A) are disposed non-rotationally on an output-side hollow shaft (29) of the first sub-transmission (A), which is coaxially rotationally supported on the output shaft (24).

10. Dual clutch transmission according to claim 9, **characterised in that** the output shaft (24) has a fifth switching element (SE-F) by means of which in the first sub-transmission (A) alternatingly the output-side hollow shaft (29) of the first sub-transmission (A) or an output-side gear (34), loosely supported on the output shaft (24), of the third wheel plane (RE-3) can be coupled with the output shaft (24).

11. Dual clutch transmission according to any of the preceding claims, **characterised in that** the output-side gears (42, 46) of the seventh and eighth wheel planes (RE-7, RE-8) of the second sub-transmission (B) are disposed non-rotationally on an output-side hollow shaft (44) of the second sub-transmission (B), which is rotationally supported coaxially on the output shaft (24).

12. Dual clutch transmission according to claim 11, **characterised in that** the output shaft (24) has a sixth switching element (SE-E) by means of which the output-side hollow shaft (44) of the second sub-transmission (B) can be coupled with the output shaft (24).

## Revendications

1. Transmission à double embrayage pour un véhicule automobile, avec des jeux de roues dentées commutables qui forment exactement huit plans de roue (RE-1 à RE-8) agencés les uns derrière les autres dans l'ordre du premier au huitième dans la direction axiale du côté entrée au côté sortie de la transmission à double embrayage, lesquels plans de roue sont associés à une première et à une deuxième transmission partielle (A, B), laquelle première transmission partielle (A) comporte un premier arbre d'entrée (22) et laquelle deuxième transmission partielle (B) comporte un deuxième arbre d'entrée (23) et les deux transmissions partielles (A, B) comportent un arbre de sortie (24) commun, dans laquelle les arbres d'entrée (22, 23) peuvent être activés alternativement par l'intermédiaire à chaque fois d'une liaison (K1, K2) commutable en charge et dans laquelle en outre les rapports de marche avant impairs (1, 3, 5, et suivants) sont associés à la deuxième transmission partielle (B) et les rapports de marche avant pairs (2, 4, 6, et suivants) sont associés à la première transmission partielle (A), lesquels rapports peuvent être commutés par l'intermédiaire d'éléments de commutation correspondants, dans laquelle les jeux de roues dentées des premier à quatrième plans de roue (RE-1 à RE-4) forment la première transmission partielle (A) et les jeux de roues dentées des cinquième à huitième plans de roue (RE-5 à RE-8) forment la deuxième transmission partielle (B),
**caractérisée en ce que** la transmission à double embrayage est une transmission à 12 rapports (20) dans laquelle, par l'utilisation multiple des jeux de roues dentées des plans de roue (RE-1 à RE-8), seuls huit plans de roue sont utilisés, dans laquelle le jeu de roues dentées du cinquième plan de roue (RE-5) de la deuxième transmission partielle (B) peut être couplé à la première transmission partielle (A) par l'intermédiaire d'un élément de commutation (SE-D), dans laquelle une roue dentée (38) côté sortie du jeu de roues dentées, commutable sur les deux transmissions partielles (A, B), du cinquième plan de roue (RE-5) est agencée sur l'arbre de sortie (24) commun et la roue dentée (37) côté entraînement du jeu de roues dentées (RE-5) commutable sur les deux transmissions partielles (A, B) peut être couplée à la première transmission partielle (A) ou à la deuxième transmission partielle (B) par l'intermédiaire d'éléments de commutation (SE-D, SE-B) et dans laquelle l'un (SE-D) des éléments de commutation (SE-D, SE-B) est un élément de commutation qui est commutable des deux côtés dans la direction axiale et au moyen duquel peut être commuté le jeu de roues dentées du quatrième plan de roue (RE-4) de la première transmission partielle (A) ou le jeu de roues dentées, commutable sur les deux transmissions partielles (A, B), du cinquième plan de roue (RE-5) de la deuxième transmission partielle (B) et dans laquelle le jeu de roues dentées, utilisé en commun, du cinquième plan de roue (RE-5) de la deuxième transmission partielle (B) est agencé au voisinage direct de la première transmission partielle (A).

2. Transmission à double embrayage selon la revendication 1, **caractérisée en ce que** le jeu de roues dentées, commutable sur les deux transmissions partielles (A, B) du cinquième plan de roue (RE-5) forme au moins le troisième rapport de marche avant de la deuxième transmission partielle (B) qui peut être relié de façon motrice, directement ou indirectement, au choix au premier ou au deuxième arbre d'entrée (22, 23) de la première ou de la deuxième transmission partielle (A, B).

3. Transmission à double embrayage selon la revendication 2, **caractérisée en ce que** le jeu de roues dentées, commutable sur les deux transmissions partielles (A, B), du cinquième plan de roue (RE-5) est aussi intégré dans le flux de puissance du premier rapport de marche avant.

4. Transmission à double embrayage selon la revendication 1, **caractérisée en ce que** les douze rapports de marche avant sont commutables au moyen de cinq éléments de commutation (SE-C, SE-D, SE-B, SE-A, SE-F) commutables des deux côtés et au moyen d'un élément de commutation (SE-E) commutable d'un côté, quatre éléments de commutation étant placés sur les deux arbres d'entrée (22, 23), agencés de façon coaxiale, des transmissions partielles (A et B) et un élément de commutation (SE-F), commutables des deux côtés, ainsi que l'élément de commutation (SE-E), commutable d'un côté, étant placés sur l'arbre de sortie (24) commun.

5. Transmission à double embrayage selon l'une quelconque des revendications précédentes, **caractérisée en ce que** les arbres d'entrée (22, 23) sont libres de roues dentées, agencées dessus de manière solidaire en rotation, des plans de roue (RE-1 à RE-8), et **en ce que** le premier arbre d'entrée (22) comporte exactement un premier élément de commutation (SE-C) commutable des deux côtés dans la direction axiale et le deuxième arbre d'entrée (23) comporte exactement un deuxième élément de commutation (SE-A) commutable des deux côtés dans la direction axiale, et **en ce que**, au moyen du premier élément de commutation (SE-C), le premier arbre d'entrée (22) peut être couplé à tous les plans de roue (RE-1 à RE-4) de la première transmission partielle (A) ou être découplé de ceux-ci, et **en ce que**, au moyen du deuxième élément de commutation (SE-A), le deuxième arbre d'entrée (23) peut être couplé à tous les plans de roue (RE-5 à RE-8) de la deuxième transmission partielle (B) ou être découplé de ceux-ci,
dans laquelle, des deux côtés du premier élément de commutation (SE-C) dans la direction axiale, sont agencés respectivement une roue dentée indépendante (27), côté entraînement et montée sur le premier arbre d'entrée (22), du premier plan de roue (RE-1) et un arbre creux (31), côté entraînement et monté de manière coaxiale sur le premier arbre d'entrée (22), de la première transmission partielle (A), lesquels peuvent être couplés en alternance au premier arbre d'entrée (22) par l'intermédiaire du premier élément de commutation (SE-C), et **en ce que** l'arbre creux côté entraînement (31) de la première transmission partielle (A) porte au moins une roue dentée solidaire (30) du deuxième plan de roue (RE-2) et une roue dentée solidaire (33) du troisième plan de roue (RE-3),
dans laquelle une roue dentée côté entraînement (35) du quatrième plan de roue (RE-4) est montée de manière indépendante sur l'arbre creux côté entraînement (31) de la première transmission partielle (A), et **en ce que** l'arbre creux côté entraînement (31) de la première transmission partielle (A) comporte un troisième élément de commutation (SE-D) avec lequel la roue dentée côté entraînement (35), montée indépendante, du quatrième plan de roue (RE-4) peut être couplée à l'arbre creux côté entraînement (31) de la première transmission partielle (A),
dans laquelle la deuxième transmission partielle (B) comporte le cinquième plan de roue (RE-5) directement adjacent à la première transmission partielle (A) dans la direction axiale, et **en ce que** le cinquième plan de roue (RE-5) peut être couplé à la première transmission partielle (A) au moyen du troisième élément de commutation (SE-D),
dans laquelle le cinquième plan de roue (RE-5) commutable sur les deux transmissions partielles (A, B) peut être monté de manière indépendante avec sa roue dentée côté entraînement (37) sur le deuxième arbre d'entrée (23), et **en ce que** la roue dentée côté entraînement (37) du cinquième plan de roue (RE-5) commutable sur les deux transmissions partielles (A, B) peut être couplée au moyen du troisième élément de commutation (SE-D) à l'arbre creux côté entraînement (31) de la première transmission partielle (A),
dans laquelle la roue dentée côté sortie (38) du cinquième plan de roue (RE-5) est montée de manière indépendante sur l'arbre de sortie (24) et peut être couplée à l'arbre de sortie (24) par l'intermédiaire d'un septième élément de commutation (SE-G).

6. Transmission à double embrayage selon l'une quelconque des revendications précédentes, **caractérisée en ce que**, dans la direction axiale du deuxième élément de commutation (SE-A) de la deuxième transmission partielle (B), une roue dentée indépendante (45), côté entraînement et montée sur le deuxième arbre d'entrée (23), du huitième plan de roue (RE-8) est agencée sur un côté du deuxième élément de commutation (SE-A) et un arbre creux côté entraînement (41), monté de façon coaxiale sur le deuxième arbre d'entrée (23), de la deuxième transmission partielle (B) est agencé sur l'autre côté du deuxième élément de commutation (SE-A), et **en ce que** la roue dentée indépendante côté entraînement (45) du huitième plan de roue (RE-8) et l'arbre creux côté entraînement (41) de la deuxième transmission partielle (B) peuvent être couplés en alternance au deuxième arbre d'entrée (23) par l'intermédiaire du deuxième élément de commutation (SE-A), et **en ce que** l'arbre creux côté entraînement (41) de la deuxième transmission partielle (B) porte au moins une roue dentée solidaire (43) d'un septième plan de roue (RE-7).

7. Transmission à double embrayage selon la revendication 6, **caractérisée en ce qu'**une roue dentée côté entraînement (39) du sixième plan de roue (RE-6) est montée de manière indépendante sur l'arbre creux côté entraînement (41) de la deuxième transmission partielle (B), et **en ce que** l'arbre creux côté entraînement (41) de la deuxième transmission partielle (B) comporte un quatrième élément de commutation (SE-B) avec lequel la roue dentée côté entraînement (39), montée indépendante, du sixième plan de roue (RE-6) peut être couplée à l'arbre creux côté entraînement (41) de la deuxième transmission partielle (B).

8. Transmission à double embrayage selon la revendication 7, **caractérisée en ce que** la roue dentée côté entraînement (37) du cinquième plan de roue (RE-5) commutable sur les deux transmissions partielles (A, B) peut être couplée à l'arbre creux côté entraînement (41) de la deuxième transmission partielle (B) au moyen du quatrième élément de commutation (SE-B).

9. Transmission à double embrayage selon l'une quelconque des revendications précédentes, **caractérisée en ce que** l'arbre de sortie (24) est agencé avec son axe parallèle au premier et au deuxième arbre d'entrée (22, 23), et/ou **en ce que** les roues dentées côté sortie (28, 32) des premier et deuxième plans de roue (RE-1, RE-2) de la première transmission partielle (A) sont agencées de manière solidaire en rotation sur un arbre creux côté sortie (29), qui est monté rotatif de manière coaxiale sur l'arbre de sortie (24), de la première transmission partielle (A).

10. Transmission à double embrayage selon la revendication 9, **caractérisée en ce que** l'arbre de sortie (24) comporte un cinquième élément de commutation (SE-F) au moyen duquel, dans la première transmission partielle (A), l'arbre creux côté sortie (29) de la première transmission partielle (A) ou une roue dentée côté sortie (34), montée indépendante sur l'arbre de sortie (24), du troisième plan de roue (RE-3) peuvent être couplés en alternance à l'arbre de sortie (24).

11. Transmission à double embrayage selon l'une quelconque des revendications précédentes, **caractérisée en ce que** les roues dentées côté sortie (42, 46) des septième et huitième plans de roue (RE-7, RE-8) de la deuxième transmission partielle (B) sont agencées de manière solidaire en rotation sur un arbre creux côté sortie (44), qui est monté rotatif de manière coaxiale sur l'arbre de sortie (24), de la deuxième transmission partielle (B).

12. Transmission à double embrayage selon la revendication 11, **caractérisée en ce que** l'arbre de sortie (24) comporte un sixième élément de commutation (SE-E) au moyen duquel l'arbre creux côté sortie (44) de la deuxième transmission partielle (B) peut être couplé à l'arbre de sortie (24).
